(19) Europäisches Patentamt
European Patent Office
Office européen des brevets

(11) **EP 3 806 208 A1**

(12) **EUROPEAN PATENT APPLICATION**
published in accordance with Art. 153(4) EPC

(43) Date of publication:
**14.04.2021 Bulletin 2021/15**

(51) Int Cl.:
**H01M 6/16** *(2006.01)*  **H01M 2/16** *(2006.01)*
**H01M 4/06** *(2006.01)*

(21) Application number: **19860948.9**

(22) Date of filing: **09.09.2019**

(86) International application number:
**PCT/JP2019/035368**

(87) International publication number:
**WO 2020/054662 (19.03.2020 Gazette 2020/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2018 JP 2018169428
24.01.2019 JP 2019010010**

(71) Applicant: **Maxell Holdings, Ltd.
Kyoto 618-8525 (JP)**

(72) Inventors:
• **KAWABE Keisuke
Kyoto, 618-8525 (JP)**
• **FUJIKAWA Katsuhiro
Kyoto, 618-8525 (JP)**
• **KANEKO Genyo
Kyoto, 618-8525 (JP)**
• **TSUJI Kyoji
Kyoto, 618-8525 (JP)**
• **SUWADA Yuki
Kyoto, 618-8525 (JP)**

(74) Representative: **Diehl & Partner
Patent- und Rechtsanwaltskanzlei mbB
Erika-Mann-Straße 9
80636 München (DE)**

(54) **CYLINDRICAL NON-AQUEOUS ELECTROLYTE PRIMARY BATTERY**

(57) A cylindrical non-aqueous electrolyte primary battery disclosed in the present application includes an electrode body in which a positive electrode having a positive electrode active material layer and a negative electrode having a negative electrode active material layer are spirally wound with a separator interposed therebetween, and a non-aqueous electrolyte solution. The thickness of the positive electrode is 1.4 mm or more. At least two microporous resin films, each of which is an independent film and has a thickness of 7 to 20 μm, are used as the separator and disposed between the positive electrode active material layer and the negative electrode active material layer. The at least two microporous resin films are not bonded together, but stacked on top of each other.

FIG. 1

**Description**

Technical Field

The present invention relates to a cylindrical non-aqueous electrolyte primary battery with a high capacity and excellent long-term reliability.

Background Art

A cylindrical non-aqueous electrolyte primary battery includes a spiral electrode body in which a negative electrode containing, e.g., lithium as an active material and a positive electrode are stacked and wound with a separator interposed therebetween. The spiral electrode body is inserted into an outer can and sealed. The cylindrical non-aqueous electrolyte primary battery with this configuration is finding a wide range of applications because it has a higher energy density and can be used for a longer period of time, as compared to batteries including, e.g., an alkaline electrolyte solution.

The cylindrical non-aqueous electrolyte primary battery has been known to be used for, e.g., light load applications such as memory backup and heavy load applications such as cameras. Due to the diversification of applicable equipment, medium load applications such as transmission and reception of data are also increasing, and there is a growing demand for the development of batteries that can achieve a high capacity under a medium load.

For example, Patent Document 1 proposes a battery that includes an electrode body as a battery element, in which an electrode with a large thickness is wound several times. Because of the use of a thick electrode, the battery can improve the filling of the active material while reducing the amount of the separator or current collector used, as compared to the conventional batteries with heavy load characteristics. Thus, the battery can have a higher capacity than the battery that includes a conventional spiral electrode body as a battery element, in which the electrode is wound many times.

In view of the applicability of the non-aqueous electrolyte primary battery to gas meter shut-off valves, wireless communications, etc., the battery is also required to have the characteristics that allow a large current to be drawn instantaneously, i.e., the characteristics that allow discharge to be repeated in a very short time (pulse discharge characteristics).

For example, Patent Documents 2 and 3 disclose a spiral electrode body including a thick electrode, as descried above. Moreover, in the spiral electrode body, a lithium-aluminum alloy is formed on the surface of metallic lithium of a negative electrode. This configuration can improve the pulse discharge characteristics under a heavy load. Patent Documents 2 and 3 also propose using a laminated body of a microporous film and a nonwoven fabric as a separator to prevent the occurrence of a short circuit by the positive electrode active material, and further to prevent a reduction in the battery characteristics due to a fall of the pulverized lithium-aluminum alloy.

On the other hand, the non-aqueous electrolyte primary battery used in a high temperature environment is required to maintain excellent battery characteristics for a long period of time. Therefore, the use of electrolyte additives such as $LiB(C_2O_4)_2$ has been studied in order to improve the storage properties of the battery at high temperatures (see Patent Documents 4 and 5).

Prior Art Documents

Patent Documents

Patent Document 1: JP 2004-335380 A
Patent Document 2: JP 2013-69466 A
Patent Document 3: JP 2012-138225 A
Patent Document 4: Japanese Patent No. 6178020
Patent Document 5: JP 2018-170276 A

Disclosure of Invention

Problem to be solved by the Invention

There is still a demand for batteries with a higher capacity, and it is also important for batteries to ensure long-term reliability, while the electrode configuration or the like is being studied. Under these circumstances, batteries that meet both requirements are needed.

To deal with this problem, the battery capacity may be increased by increasing the thickness of the electrode and the long-term reliability may be improved by using the electrolyte additives, as described in the above Patent Documents. However, if the thickness of the electrode is increased, particularly if the thickness of the positive electrode is larger than a predetermined value, the flexibility and softness of the active material layer will be reduced, so that the surface of the active material layer is likely to be uneven during winding. For this reason, when such a positive electrode is wound into the electrode body and placed in a battery container (metal can), the separator may be pressed against the active material layer of the positive electrode by a force that brings the electrode body back to its original shape inside the container. Consequently, the portions of the separator that would be in contact with the protrusions of the surface of the active material layer are easily broken and can cause an internal short circuit. Moreover, the electrode body is subjected to a force in the winding axis direction as it is inserted into the battery container, and thus the electrode body is likely to be displaced.

The present application has been made in view of the circumstances as described above, and provides a cylindrical non-aqueous electrolyte primary battery with a high capacity and excellent long-term reliability.

Means for Solving Problem

A cylindrical non-aqueous electrolyte primary battery disclosed in the present application includes an electrode body in which a positive electrode having a positive electrode active material layer and a negative electrode having a negative electrode active material layer are spirally wound with a separator interposed therebetween, and a non-aqueous electrolyte solution. The thickness of the positive electrode is 1.4 mm or more. At least two microporous resin films, each of which is an independent film and has a thickness of 7 to 20 $\mu$m, are used as the separator and disposed between the positive electrode active material layer and the negative electrode active material layer. The at least two microporous resin films are not bonded together, but stacked on top of each other.

Effects of the Invention

The present application can provide a cylindrical non-aqueous electrolyte primary battery with a high capacity and excellent long-term reliability.

Brief Description of Drawing

[FIG. 1] FIG. 1 is a vertical cross-sectional view schematically illustrating an example of a cylindrical non-aqueous electrolyte primary battery of an embodiment.
[FIG. 2] FIG. 2 is a horizontal cross-sectional view of the cylindrical non-aqueous electrolyte primary battery in FIG. 1.
[FIG. 3] FIG. 3 is a partial cross-sectional view schematically illustrating an example of a wound electrode body that constitutes the cylindrical non-aqueous electrolyte primary battery of this embodiment.
[FIG. 4] FIG. 4 is a diagram for explaining a method for measuring the strength of a separator used in cylindrical non-aqueous electrolyte primary batteries of Examples 1, 2 and Comparative Examples 1, 2.
[FIG. 5] FIG. 5 is a graph showing the measurement results of the strength of the separator used in the cylindrical non-aqueous electrolyte primary battery of Example 1.
[FIG. 6] FIG. 6 is a graph showing the measurement results of the strength of the separator used in the cylindrical non-aqueous electrolyte primary battery of Example 2.
[FIG. 7] FIG. 7 is a graph showing the measurement results of the strength of the separator used in the cylindrical non-aqueous electrolyte primary battery of Comparative Example 1.
[FIG. 8] FIG. 8 is a graph showing the measurement results of the strength of the separator used in the cylindrical non-aqueous electrolyte primary battery of Comparative Example 2.

Description of the Invention

Hereinafter, an embodiment of a cylindrical non-aqueous electrolyte primary battery disclosed in the present application will be described. The cylindrical non-aqueous electrolyte primary battery of this embodiment includes an electrode body (wound electrode body) in which a positive electrode having a positive electrode active material layer and a negative electrode having a negative electrode active material layer are spirally wound with a separator interposed therebetween. The positive electrode may have a structure in which, e.g., the positive electrode active material layer is formed on one side or both sides of a current collector. From the viewpoint of increasing the capacity of the battery, the thickness of the positive electrode (e.g., the total thickness of the current collector and the positive electrode active material layer that is provided on one side or both sides of the current collector) is 1.4 mm or more.

On the other hand, when the wound electrode body of the battery includes a thick positive electrode, as described above, the separator is likely to be broken and can cause an internal short circuit.

However, the studies conducted by the present inventors showed that the occurrence of the internal short circuit due to the presence of a thick positive electrode could be satisfactorily reduced by disposing at least two microporous resin films, each of which was an independent film and had a thickness of 7 to 20 $\mu$m, between the positive electrode and the negative electrode as the separator so that the microporous resin films were not bonded together, but stacked on top of each other. This configuration was found to be superior to not only the use of a single microporous resin film with a thickness in the above range as the separator, but also the use of a single microporous resin film with a thickness corresponding to the total thickness of two or more microporous resin films and the use of two or more microporous resin films that were bonded together. The cylindrical non-aqueous electrolyte primary battery of this embodiment has the above configuration and therefore can achieve a high capacity while increasing the thickness of the positive electrode, and can also ensure high reliability.

Moreover, the force pressing the battery container becomes larger as the thickness of the positive electrode increases. Thus, the friction between the battery container and the electrode body is increased, and the electrode body is susceptible to the force in the winding axis direction when it is inserted into the battery container. Therefore, if the separator includes a laminate of a microporous film and a nonwoven fabric, the electrode body is likely to be displaced in the winding axis direction because the coefficient of friction between the opposing surfaces of the microporous film and the nonwoven fabric is small.

On the other hand, in the battery of this embodiment, at least two microporous resin films are not bonded together, but stacked on top of each other. Since the coefficient of friction between the microporous films is larger than that between the microporous film and the nonwoven fabric, the displacement of the electrode body in the winding axis direction can be reduced.

The non-aqueous electrolyte solution used for the cylindrical non-aqueous electrolyte primary battery of this embodiment is a solution in which an electrolyte salt is dissolved in an organic solvent. The electrolyte salt preferably contains at least one lithium salt selected from $LiClO_4$, $LiCF_3SO_3$, $LiC_2F_5SO_3$, $LiN(FSO)_2$, or $LiN(CF_3SO_2)_2$ (referred to as a lithium salt A in the following) and further contains $LiB(C_2O_4)_2$ as an electrolyte additive.

The lithium salt A functions as an electrolyte salt to ensure the lithium ion conductivity in the non-aqueous electrolyte solution and has excellent heat resistance. Therefore, the non-aqueous electrolyte solution containing the lithium salt A can serve to improve, e.g., high temperature storage properties of the non-aqueous electrolyte primary battery (i.e., the long-term reliability of the battery in a high temperature environment).

The electrolyte additive $LiB(C_2O_4)_2$ acts as an electrolyte salt and also forms a protective coating on the surface of the negative electrode to reduce the reaction between the non-aqueous electrolyte solution and the negative electrode. This makes it possible to reduce the generation of gas and an increase in the internal resistance caused by the above reaction.

In the cylindrical non-aqueous electrolyte primary battery of this embodiment, the action of the lithium salt A functions synergistically with the action of $LiB(C_2O_4)_2$, so that the long-term reliability of the battery can be more improved.

The non-aqueous electrolyte solution may contain only the lithium salt A as an electrolyte salt. It is also preferable that the non-aqueous electrolyte solution further contains at least one lithium salt B selected from $LiPF_6$, $LiBF_4$, $LiAsF_6$, or $LiSbF_6$. The presence of the lithium salt B along with $LiB(C_2O_4)_2$ in the electrolyte solution can provide a better protective coating on the surface of the negative electrode, and thus can further improve the long-term reliability of the battery.

Examples of the organic solvent that may be contained in the non-aqueous electrolyte solution include the following: cyclic carbonates such as ethylene carbonate, propylene carbonate, butylene carbonate, and vinylene carbonate; chain carbonates such as dimethyl carbonate, diethyl carbonate, and methyl ethyl carbonate; ethers such as 1,2-dimethoxyethane (ethylene glycol dimethyl ether), Diglyme (diethylene glycol dimethyl ether), Triglyme (triethylene glycol dimethyl ether), Tetraglyme (tetraethylene glycol dimethyl ether), methoxyethoxyethane, 1,2-diethoxyethane, and tetrahydrofuran; cyclic esters such as $\gamma$-butyrolactone; and nitrile. These may be used alone or in combinations of two or more. In particular, any combination of the cyclic carbonates and the ethers is preferred.

The cyclic carbonates may be preferably ethylene carbonate and propylene carbonate. The ethers may be preferably 1,2-dimethoxyethane.

When the cyclic carbonate and the ether are combined as a solvent of the non-aqueous electrolyte solution, the proportion of the cyclic carbonate is preferably 20% by volume or more, and more preferably 30% by volume or more of the total 100% by volume of the cyclic carbonate and the ether in the entire solvent, in terms of heat resistance. On the other hand, the proportion of the ether is preferably 30% by volume or more, more preferably 40% by volume or more, and most preferably 50% by volume or more of the total 100% by volume of the cyclic carbonate and the ether in the entire solvent, in terms of discharge characteristics.

From the viewpoint of ensuring good lithium ion conductivity, the concentration of the lithium salt A in the non-aqueous electrolyte solution is preferably 0.3 mol/L or more, and more preferably 0.4 mol/L or more. The concentration of the lithium salt A is also preferably 1.2 mol/L or less, and more preferably 1.0 mol/L or less. When the lithium salt A includes a plurality of lithium salts, the total amount of the lithium salts may be preferably adjusted within the above range.

From the viewpoint of satisfactorily ensuring the above effect of $LiB(C_2O_4)_2$, the content of $LiB(C_2O_4)_2$ in the non-aqueous electrolyte solution is preferably 0.1% by mass or more, more preferably 0.3% by mass or more, and most preferably 0.5% by mass or more. However, if the content of $LiB(C_2O_4)_2$ in the non-aqueous electrolyte solution is too large, the internal resistance of the battery may be increased, resulting in poor discharge characteristics. Therefore, from the viewpoint of improving the discharge characteristics, the content of $LiB(C_2O_4)_2$ in the non-aqueous electrolyte solution is preferably 5% by mass or less, more preferably 3% by mass or less, particularly preferably 2% by mass or less, and most preferably 1.5% by mass or less.

When the non-aqueous electrolyte solution further contains the lithium salt B, the proportion of the lithium salt B is preferably 1 mol% or more, more preferably 5 mol% or more, and most preferably 10 mol% or more of the total 100 mol% of the lithium salt A and the lithium salt B in the non-aqueous electrolyte solution, from the viewpoint of satisfactorily ensuring the above effect of the lithium salt B.

However, if the proportion of the lithium salt B is too high, the protective coating formed on the surface of the negative electrode becomes too thick, and the internal resistance of the battery may be increased, resulting in poor discharge characteristics such as low temperature characteristics. Therefore, from the viewpoint of improving the discharge characteristics, the proportion (i.e., molar ratio) of the lithium salt B is preferably 50 mol% or less, more preferably 40 mol% or less, and most preferably 30 mol% or less of the total 100 mol% of the lithium salt A and the lithium salt B in the non-aqueous electrolyte solution.

The positive electrode of the cylindrical non-aqueous electrolyte primary battery of this embodiment has the positive electrode active material layer, as described above. For example, the positive electrode active material layer is formed on one side or both sides of the current collector. The positive electrode active material layer may generally contain a conductive assistant and a binder in addition to the positive electrode active material.

Examples of the positive electrode active material include manganese dioxide, carbon fluoride, iron sulfide, compounds obtained by adding lithium to these materials, and a spinel-type lithium manganese composite oxide.

Examples of the conductive assistant include graphite and carbon blacks (such as Ketjenblack, acetylene black, and furnace black). These may be used alone or in combinations of two or more. Examples of the binder include fluorocarbon resins such as polytetrafluoroethylene (PTFE) and polyvinylidene fluoride (PVDF), and a rubber-based binder. The fluorocarbon resins (PTFE, PVDF, etc.) may be in the form of dispersion or powder. In this case, the dispersion-type fluorocarbon resins are particularly preferred.

In the positive electrode active material layer, e.g., the content of the positive electrode active material is preferably 92 to 97% by mass, the content of the conductive assistant is preferably 2 to 4% by mass, and the content of the binder is preferably 1 to 4% by mass.

The current collector of the positive electrode may be made of, e.g., stainless steel such as SUS316, SUS430, and SUS444 or aluminum, and may be in the form of, e.g., plain-woven wire mesh, expanded metal, lath mesh, punched metal, or foil (plate).

A paste-like conductive material may be applied to the surface of the positive electrode current collector. The application of the conductive material is found to significantly improve the current collection effect of the current collector even if it is in the form of mesh with a three-dimensional structure, as in the case of the current collector formed of a substantially flat plate material such as metal foil or punched metal. This may be attributed to the fact that a path which goes through the conductive material filled in the openings of the mesh current collector is effectively used together with a path in which the metal portion of the mesh current collector comes into direct contact with a positive electrode mixture layer.

The conductive material may be, e.g., a silver paste or a carbon paste. In particular, the carbon paste is suitable for reducing the production cost of the cylindrical non-aqueous electrolyte primary battery because it has a lower material cost and substantially the same contact effect compared to the silver paste. A binder for the conductive material is preferably a heat-resistant material such as water glass or an imide-based binder. The reason for this is that water in the positive electrode mixture layer should be removed by drying at a temperature of more than 200°C.

The thickness of the positive electrode may be 1.4 mm or more, and preferably 1.5 mm or more. The battery including the positive electrode with such a thickness can achieve a high capacity, although there is a risk of internal short circuit, as described above. However, the battery of this embodiment can reduce the occurrence of the internal short circuit. Nevertheless, if the positive electrode is too thick, e.g., the positive electrode active material layer becomes thick and thus prevents the discharge reaction from proceeding uniformly. Consequently, the positive electrode may have a portion that would not fully contribute to discharge, so that the effect of increasing the capacity of the battery can be lower as the thickness of the positive electrode is larger. Therefore, the thickness of the positive electrode is preferably 2 mm or less, and more preferably 1.8 mm or less.

The thickness of the positive electrode active material layer (i.e., the thickness per one side of the current collector when it is formed on both sides of the current collector) is preferably 0.5 to 0.95 mm. The thickness of the positive electrode current collector is preferably 0.1 to 0.4 mm.

To increase the capacity of the battery, the density of the positive electrode active material layer is preferably 2.5 g/cm$^3$ or more, more preferably 2.6 g/cm$^3$ or more, and most preferably 2.7 g/cm$^3$ or more. On the other hand, to adjust the amount of absorption of the non-aqueous electrolyte solution and prevent a reduction in the discharge characteristics, the density of the positive electrode active material layer is preferably 3.2 g/cm$^3$ or less, more preferably 3.1 g/cm$^3$ or more, and most preferably 3.0 g/cm$^3$ or less.

The positive electrode can be produced in the following manner. For example, the positive electrode active material is mixed with the conductive assistant and the binder, and optionally water or the like, to form a positive electrode mixture (slurry). Then, the positive electrode mixture is rolled into a preliminary sheet by, e.g., a roller. The preliminary sheet is dried and crushed into pieces. The resulting pieces are again formed into a sheet by, e.g., rolling. This sheet is used as a positive electrode mixture sheet and disposed on one side or both sides of the current collector. The positive electrode mixture sheet and the current collector are integrated together by, e.g., pressing. Thus, a layer of the positive electrode mixture sheet (i.e., a positive electrode active material layer) is provided on one side or both sides of the current collector.

Specifically, e.g., the current collector and two positive electrode mixture sheets are arranged in layers so that the outer edge of the current collector is located several millimeters inward from the outer edges of the positive electrode mixture sheets. Then, a portion of the layered body that is 3 to 10 mm away from the end portion in its length direction, which will be a winding start end portion, is pressed. As a result, a positive electrode having the positive electrode active material layers on both sides of the current collector can be produced. In terms of workability, it is preferable that the positive electrode mixture sheet is integrated with the current collector before the preparation of a wound electrode body. However, the independent positive electrode mixture sheet may be integrated with the current collector when they are wound into the wound electrode body. This method does not pose any particular problem in the characteristics of the battery.

The positive electrode is not limited to that produced by the above method and may be produced by the other methods. For example, the positive electrode mixture slurry is applied to one side or both sides of the current collector and dried, which is subjected to, e.g., pressing as needed. Thus, the positive electrode active material layer is provided on one side or both sides of the current collector.

The separator of the cylindrical non-aqueous electrolyte primary battery of this embodiment includes at least two microporous resin films, each of which is an independent film, as described above. The microporous resin films are not bonded together, but stacked on top of each other.

Each of the microporous resin films may be a microporous resin film that is generally used as a separator of a non-aqueous electrolyte primary battery. Examples of the resin constituting the microporous resin film includes the following: polyolefins such as polyethylene (PE) and polypropylene (PP); polyesters such as polyethylene terephthalate (PET) and polybutylene terephthalate (PBT); and polyphenylene sulfide (PPS). These may be used alone or in combinations of two or more.

The microporous resin film can be obtained in such a way that the above resin is mixed with, e.g., an inorganic filler to form a film (sheet) and the film is uniaxially or biaxially drawn, so that fine pores are formed in the film. Alternatively, the above resin is mixed with other resins to form a film (sheet), and then the film is immersed in a solvent that dissolves only the other resins, so that pores are formed in the film.

The porosity of the microporous resin film is preferably 35% or more from the viewpoint of improving the battery characteristics. Moreover, the porosity of the microporous resin film is preferably 55% or less from the viewpoint of increasing the strength of the microporous resin film to some extent.

The porosity P of the microporous resin film can be calculated using the following formula (1) to determine the sum of the components i based on, e.g., the thickness of the microporous resin film, the mass per area of the microporous resin film, and the density of the components of the microporous resin film (the porosity of the separator in the following Examples is obtained by this method).

$$P = 100 - (\Sigma ai/\rho i) \times (m/t) \qquad (1)$$

In the formula (1), ai represents the ratio of the components i expressed by percentage by mass, pi represents the density (g/cm$^3$) of the components i, m represents the mass per unit area (g/cm$^2$) of the microporous resin film, and t represents the thickness (cm) of the microporous resin film

The thickness of each of the microporous resin films of the separator may be 7 μm or more, and preferably 10 μm or more from the viewpoint of satisfactorily separating the positive electrode from the negative electrode and satisfactorily reducing the occurrence of the internal short circuit. However, an increase in the thickness of the separator may reduce the amount of the positive electrode active material or the negative electrode active material in the battery. Therefore, in order to reduce a decrease in capacity due to a reduction in the amount of the positive or negative electrode active material, the thickness of each of the microporous resin films of the separator may be 20 $\mu$m or less, and preferably 18 $\mu$m or less.

Moreover, from the viewpoint of ensuring a better effect of reducing the occurrence of the internal short circuit, the total thickness of the microporous resin films is preferably 20 $\mu$m or more, and more preferably 25 $\mu$m or more. From the viewpoint of satisfactorily reducing a decrease in capacity caused by an increase in the thickness of the separator, the total thickness of the microporous resin films is preferably 40 $\mu$m or less, and more preferably 35 $\mu$m or less.

The number of the microporous resin films of the separator may be two or more, and is preferably set so that the total thickness of the microporous resin films is within the range that meets the above suitable values. The number of the microporous resin films is more preferably a minimum number (two) required to prevent the displacement of the stacked films and to simplify the manufacturing process.

The negative electrode of the cylindrical non-aqueous electrolyte primary battery of this embodiment has the negative electrode active material layer, as described above. For example, the negative electrode active material layer is formed on one side or both sides of the current collector.

The negative electrode active material layer may include, e.g., a lithium sheet (lithium metal foil or lithium alloy foil). When the negative electrode active material layer includes lithium alloy foil, the lithium alloy may be, e.g., a lithium-aluminum alloy. In particular, it is preferable that the negative electrode active material layer may be a laminated material of lithium metal foil and aluminum thin foil, and that the laminated material is placed with at least the aluminum thin foil facing the positive electrode active material layer. The laminated material of the lithium metal foil and the aluminum thin foil comes into contact with the non-aqueous electrolyte solution in the battery and generates a lithium-aluminum alloy at the interface with the non-aqueous electrolyte solution. Thus, the use of the laminated material of the lithium metal foil and the aluminum thin foil allows a lithium-aluminum alloy to be formed on the surface of the lithium sheet of the negative electrode active material layer in the battery. In this case, since the lithium-aluminum alloy is changed to a fine powder, the specific surface area of the alloy-containing surface of the lithium sheet is increased. Therefore, the alloy-containing surface is located opposite the positive electrode active material layer, so that the battery can be discharged more efficiently.

When the positive electrode includes a manganese oxide such as manganese dioxide, manganese is likely to be eluted from the positive electrode into the electrolyte solution during the storage of the battery at high temperatures. For this reason, if the negative electrode includes lithium, the eluted manganese may be deposited on the surface of the negative electrode, which may increase the internal resistance of the battery.

On the other hand, the lithium-aluminum alloy formed on the surface of lithium can prevent the deposition of manganese on the surface of the negative electrode. Thus, an increase in the internal resistance of the battery can be reduced more effectively.

The thickness of the lithium sheet of the negative electrode active material layer is preferably 0.1 to 1 mm. When the negative electrode active material layer is the laminated material of the lithium metal foil and the aluminum thin foil, the thickness of the lithium metal foil is preferably 0.1 to 1 mm and the thickness of the aluminum thin foil is preferably 0.005 to 0.05 mm.

The current collector of the negative electrode may be foil of, e.g., copper, nickel, iron, or stainless steel. The internal volume of the battery container (outer can) is reduced by the amount corresponding to the thickness of the negative electrode current collector. Therefore, the thickness of the negative electrode current collector is preferably as small as possible. Specifically, it is recommended that the thickness of the negative electrode current collector be, e.g., 0.1 mm or less. If the negative electrode current collector is too thick, the amount of the lithium sheet or the like of the negative electrode active material layer has to be reduced. This may reduce the effect of increasing the battery capacity with an increase in the thickness of the positive electrode, as described above. Moreover, if the negative electrode current collector is too thin, it is easily broken. Therefore, the thickness of the negative electrode current collector is preferably 0.005 mm or more. The width of the negative electrode current collector is preferably the same as or larger than that of the lithium sheet of the negative electrode active material layer. The area of the negative electrode current collector is preferably 100 to 130% of the area of the lithium sheet. When the area of the negative electrode current collector falls in the above range, the width of the negative electrode current collector is the same as or larger than that of the lithium sheet, and the length of the negative electrode current collector is longer than that of the lithium sheet. This configuration can make the lithium sheet in contact with the negative electrode current collector along its periphery and prevent the electrical connection from being cut off.

In the wound electrode body of the cylindrical non-aqueous electrolyte primary battery disclosed in the present application, the area of the positive electrode active material layer and the area of the negative electrode that faces the positive electrode active material layer are relatively reduced with an increase in the thickness of the positive electrode active material layer. Thus, it may be possible to reduce the amount of the electrolyte additive that is effective in forming the protective coating to reduce the reaction between the non-aqueous electrolyte solution and the negative electrode.

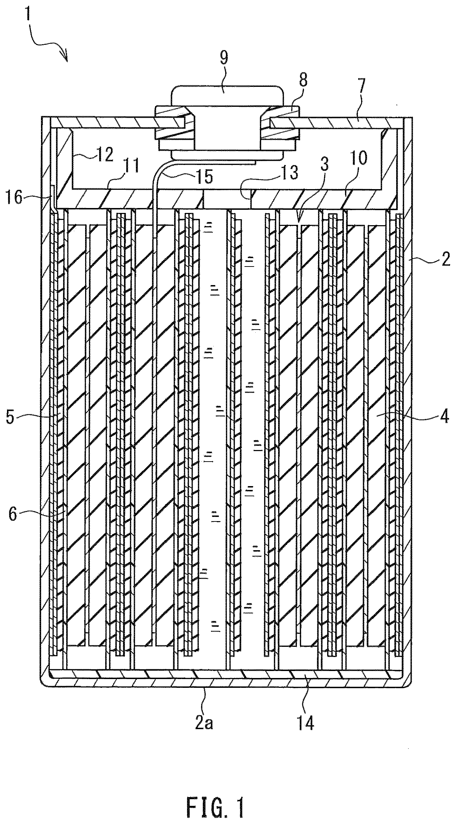

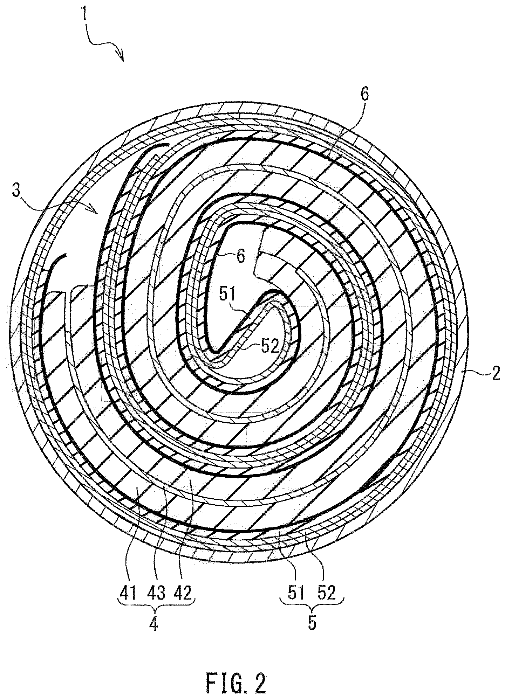

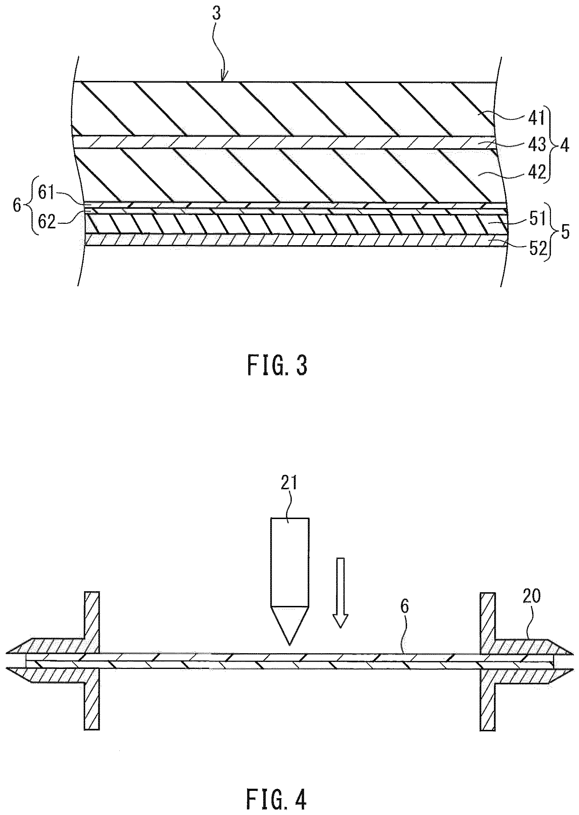

Next, the structure of the cylindrical non-aqueous electrolyte primary battery of this embodiment will be described with reference to the drawings. FIG. 1 is a vertical cross-sectional view schematically illustrating an example of the cylindrical non-aqueous electrolyte primary battery of this embodiment. FIG. 2 is a horizontal cross-sectional view of the cylindrical non-aqueous electrolyte primary battery in FIG. 1. FIG. 3 is a partial cross-sectional view schematically illustrating an example of a wound electrode body that constitutes the cylindrical non-aqueous electrolyte primary battery of this embodiment.

In FIG. 1, the cylindrical non-aqueous electrolyte primary battery 1 includes an outer can 2, a wound electrode body 3, a non-aqueous electrolyte solution, and a sealing structure. The outer can 2 has a cylindrical shape with a bottom and an upper opening. The wound electrode body 3 is inserted in the outer can 2 and configured such that a positive electrode 4 and a negative electrode 5 are spirally wound with the separator 6 interposed therebetween. The sealing structure seals the upper opening of the outer can 2. In other words, the cylindrical non-aqueous electrolyte primary battery 1 of FIG. 1 has power generation elements, including the wound electrode body 3 obtained by winding spirally the positive electrode 4 and the negative electrode 5 with the separator 6 interposed therebetween and the non-aqueous electrolyte solution, in the space surrounded by the outer can 2 and the sealing structure that seals the upper opening of the outer can 2.

FIG. 2 shows a horizontal cross-sectional view of the cylindrical non-aqueous electrolyte primary battery in FIG. 1. As shown in FIG. 2, the wound electrode body 3 is obtained by winding a long positive electrode 4 and a long negative electrode 5 with the separator 6 interposed therebetween substantially in the form of a cylinder as a whole. In the cylindrical non-aqueous electrolyte primary battery 1 of FIG. 2, the positive electrode 4 has a structure in which two positive electrode mixture sheets 41, 42 are stacked with a current collector 43 interposed therebetween. Moreover, the negative electrode 5 has a structure in which a negative electrode active material layer 51 and a current collector 52 are stacked. In the wound electrode body 3, the single long negative electrode 5 is wound so that it is folded back in the winding center, as shown in FIG. 2. Thus, in the cross section shown in FIG. 1, the negative electrode 5 and the folded negative electrode 5 are joined together while their respective current collectors are in contact with each other and their respective negative electrode active material layers face the positive electrode 4 with the separator 6 interposed therebetween.

For the purpose of brevity, the individual microporous resin films of the separator 6 are not distinguished from each other in FIGS. 1 and 2. In the cylindrical non-aqueous electrolyte primary battery of this embodiment, as shown in FIG. 3, two or more microporous resin films (two microporous resin films 61, 62 in FIG. 3) are not bonded together, but stacked on top of each other between the positive electrode 4 and the negative electrode 5. Moreover, in the wound electrode body 3 of FIG. 3, the positive electrode 4 has the positive electrode active material layers 41, 42 on both sides of the positive electrode current collector 43, and the negative electrode 5 has the negative electrode active material layer 51 on one side of the negative electrode current collector 52.

The sealing structure of the cylindrical non-aqueous electrolyte primary battery 1 includes a cover plate 7 that is fixed to the inner edge of the upper opening of the outer can 2, a terminal body 9 that is placed in an opening provided in the center of the cover plate 7 via an insulation packing 8 made of, e.g., polypropylene, and an insulation plate 10 that is located under the cover plate 7. The insulation plate 10 is in the form of a round dish that opens upward and includes a disk-like base 11 and an annular side wall 12 formed along the edge of the base 11. A gas outlet 13 is provided in the center of the base 11. The cover plate 7 is received by the upper end of the side wall 12 and fixed to the inner edge of the upper opening of the outer can 2 by laser welding or crimp seal via packing. To deal with a sharp rise in the internal pressure of the battery, the cover plate 7 or the bottom 2a of the outer can 2 may have a thin portion (vent). The positive electrode 4 is connected to the lower surface of the terminal body 9 by a positive electrode lead 15. A negative electrode lead 16 is attached to the negative electrode 5 and welded to the upper inner surface of the outer can 2. A resin insulation plate 14 is placed on the bottom 2a of the outer can 2.

The cylindrical non-aqueous electrolyte primary battery of this embodiment has been described with reference to FIGS. 1, 2 and 3. However, these drawings represent only an example of the battery of this embodiment, and the battery of this embodiment is not limited to the representation of these drawings. FIGS. 1, 2 and 3 are intended to explain the configuration of the battery of this embodiment and are not necessarily accurate in size or the like.

The cylindrical non-aqueous electrolyte primary battery of this embodiment can be used for various purposes, to which the conventionally known cylindrical non-aqueous electrolyte primary batteries have been applied.

Examples

Hereinafter, the cylindrical non-aqueous electrolyte primary battery disclosed in the present application will be described in detail based on examples. However, the following examples do not limit the cylindrical non-aqueous electrolyte primary battery of the present application.

(Example 1)

A cylindrical non-aqueous electrolyte primary battery of Example 1 will be described in the following order: [production of positive electrode], [production of negative electrode], [production of wound electrode body], [assembly of battery], and [post-treatment (preliminary discharge, aging)].

[Production of positive electrode]

A positive electrode mixture was prepared in the following procedure. First, 2 parts by mass of Ketjenblack "EC300J" (trade name) (conductive assistant) with a BET specific surface area of 800 $m^2/g$ and 94.5 parts by mass of manganese dioxide (positive electrode active material) with an average particle size of 35 $\mu$m were dry-mixed with a planetary mixer for 5 minutes. Then, water was added to the mixture in an amount corresponding to 20% (mass ratio) of the total solid content, and further mixed for 5 minutes. Next, a PTFE dispersion ("D-1" manufactured by DAIKIN INDUSTRIES, LTD.) was added so that the content of PTFE was 3.5 parts by mass. Finally, water was added until the total solid content ratio reached 74% by mass, and further mixed for 5 minutes, resulting in a positive electrode mixture.

Next, the positive electrode mixture was rolled into a sheet by a roller which had a diameter of 250 mm and was adjusted to a temperature of 125 $\pm$ 5°C. The sheet was dried in a temperature environment of 105 $\pm$ 5°C until the residual water was reduced to 2% by mass or less. Thus, a preliminary sheet was obtained. Further, the preliminary sheet was crushed by a crusher into a powder with a particle size of about 0.5 mm or less. Then, the powder was again rolled by the roller to form a positive electrode mixture sheet with a thickness of 0.79 mm and a density of 2.7 $g/cm^3$.

The positive electrode mixture sheet thus obtained was cut into an inner positive electrode mixture sheet (i.e., the positive electrode mixture sheet 42 in FIG. 2) with a width of 37.5 mm and a length of 64 mm and an outer positive electrode mixture sheet (i.e., the positive electrode mixture sheet 41 in FIG. 2) with a width of 37.5 mm and a length of 76 mm.

Expanded metal of stainless steel (SUS316) was used as a positive electrode current collector. The expanded metal was cut to a width of 34 mm and a length of 60 mm. A ribbon of stainless steel with a thickness of 0.1 mm and a width of 3 mm was attached to the central portion of the expanded metal in the length direction by resistance welding and used as a positive electrode lead. Moreover, carbon paste (manufactured by Nippon Graphite Co., Ltd.) was applied to this expanded metal so as not to fill the meshes, and then was dried at 105 $\pm$ 5°C, thereby providing a positive electrode current collector. The amount of the carbon paste applied was set so that the carbon paste was 5 $mg/cm^2$ after drying.

Next, the positive electrode current collector was interposed between the inner positive electrode mixture sheet and the outer positive electrode mixture sheet. In this state, by fixing only one edge of the layered body in the length direction, the inner and outer positive electrode mixture sheets and the positive electrode current collector were integrated together. Specifically, the inner positive electrode mixture sheet and the outer positive electrode mixture sheet are arranged to keep the edge of the inner positive electrode mixture sheet in the length direction aligned with the edge of the outer positive electrode mixture sheet in the length direction, and also to prevent the edge of the positive electrode current collector from protruding from the aligned edges of the two positive electrode mixture sheets. Subsequently, a portion of the layered body that was 5 mm away from the above edges of the two positive electrode mixture sheets was crimped by pressing. Thus, the inner and outer positive electrode mixture sheets were integrated with the positive electrode current collector, which was then dried with hot air at 300 $\pm$ 10°C for 15 minutes, so that a sheet-type positive electrode with a thickness of 1.6 mm and a width of 37.5 mm was obtained.

[Production of negative electrode]

Lithium metal foil with a width of 37 mm, a length of 165 mm, and a thickness of 0.27 mm was placed on copper foil (negative electrode current collector) with a width of 39 mm, a length of 170 mm, and a thickness of 15 $\mu$m. Further, aluminum foil with a width of 27 mm, a length of 165 mm, and a thickness of 6 $\mu$m was placed on the lithium metal foil. These components were arranged with their edges in the width direction aligned with each other, which were to be located on the lower side of the battery when the wound electrode group was inserted into the outer can. Thus, a sheet-type negative electrode was obtained. A negative electrode lead of nickel with a width of 3 mm, a length of 20 mm, and a thickness of 0.1 mm was crimped onto the lithium metal foil. In the sheet-type negative electrode, a lithium-aluminum alloy was formed on the surface of the negative electrode after assembly of the battery.

[Production of wound electrode body]

Two microporous PE films were aligned and stacked on top of each other without being bonded together and used as a separator. Each of the microporous films had a width of 45 mm, a length of 180 mm, and a thickness of 16

$\mu$m (porosity: 46%, air permeability: 200 sec/100 mL, piercing strength: 380 g).

The sheet-type negative electrode was folded back with the copper foil inside, and the bent portion was located at the inner circumference in the longitudinal direction. Then, the negative electrode was wound together with the separator and the sheet-type positive electrode to from a wound electrode body. In this case, winding was performed in such a way that one edge of the separator (i.e., the edge to be located on the upper side of the battery) protruded 1.5 mm from the edge of the negative electrode (i.e., the edge to be located on the upper side of the battery).

The portion of the separator protruding from the positive electrode on the surface of the wound electrode body, which was to be located at the bottom of the battery, was bent toward the winding center of the wound electrode body, and thus the edge of the positive electrode was covered with the separator.

[Assembly of battery]

The assembly process of the cylindrical non-aqueous electrolyte primary battery will be described with reference to FIG. 1. The PP insulation plate 14 with a thickness of 0.2 mm was placed on the bottom 2a of the outer can 2, which was made of a nickel-plated iron can and had a cylindrical shape with a bottom. Then, the wound electrode body 3 was placed on the insulation plate 14 with the positive electrode lead 15 facing upward. The negative electrode lead 16 of the wound electrode body 3 was resistance-welded to the inner surface of the outer can 2, and the positive electrode lead 15 was resistance-welded to the lower surface of the terminal body 9 after the insulation plate 10 was inserted.

A non-aqueous solution was prepared as an electrolyte solution by dissolving $LiCF_3SO_3$ at a concentration of 0.7 mol/L in a mixed solvent of ethylene carbonate, propylene carbonate, and dimethoxyethane (volume ratio of 1 : 1 : 3). Then, 3.5 mL of the electrolyte solution was injected into the outer can 2. The injection was divided into 3 times, and the entire amount of the electrolyte solution was injected while reducing the pressure in the final process. After the injection of the electrolyte solution, the cover plate 7 was fitted in the upper opening of the outer can 2, and the inner edge of the opening end of the outer can 2 was welded with the outer edge of the cover plate 7 by laser welding. Thus, the opening of the outer can 2 was sealed.

[Post-treatment (preliminary discharge, aging)]

The sealed battery was pre-discharged with a resistance of 1 $\Omega$ for 30 seconds and stored at 70°C for 6 hours. Then, the second pre-discharge of the battery was performed with a constant resistance of 1 $\Omega$ for 1 minute, so that a lithium-aluminum alloy was formed on the surface of the sheet-type negative electrode facing the separator. The pre-discharged battery was aged at room temperature for 7 days, and the open-circuit voltage was measured to confirm that a stable voltage was provided. Consequently, a cylindrical non-aqueous electrolyte primary battery with an outer diameter of 17.0 mm and a total height of 45 mm was obtained.

(Example 2)

A cylindrical non-aqueous electrolyte primary battery was produced in the same manner as Example 1 except that a microporous PE film having a width of 45 mm, a length of 180 mm, and a thickness of 16 $\mu$m (porosity: 46%, air permeability: 200 sec/100 mL, piercing strength: 380 g) and a microporous PE film having the same size as the above microporous film and a thickness of 9 $\mu$m (porosity: 40%, air permeability: 150 sec/100 mL, piercing strength: 290 g) were aligned and stacked on top of each other without being bonded together and used as a separator.

(Example 3)

A cylindrical non-aqueous electrolyte primary battery was produced in the same manner as Example 1 except that aluminum foil was not provided on the lithium metal foil in the production of the sheet-type negative electrode so as not to form a lithium-aluminum alloy on the surface of the negative electrode.

(Comparative Example 1)

A cylindrical non-aqueous electrolyte primary battery was produced in the same manner as Example 1 except that a microporous PE film having a width of 45 mm, a length of 180 mm, and a thickness of 16 $\mu$m (porosity: 46%, air permeability: 200 sec/100 mL, piercing strength: 380 g) and a PP nonwoven fabric having the same size as the above microporous film and a thickness of 20 $\mu$m (porosity: 61%, air permeability: 10 sec/100 mL) were aligned and stacked on top of each other without being bonded together and used as a separator.

In some batteries of Comparative Example 1, the wound electrode group was displaced in the winding axis direction as it was inserted into the outer can. Therefore, only the assembly that did not have any winding displacement was sealed, and thus a battery was produced.

(Comparative Example 2)

A cylindrical non-aqueous electrolyte primary battery was produced in the same manner as Example 1 except that a microporous PP film having a width of 45 mm, a length of 180 mm, and a thickness of 25 $\mu$m (porosity: 38%, air permeability: 620 sec/100 mL, piercing strength: 466 g) was used as a separator.

(Comparative Example 3)

A cylindrical non-aqueous electrolyte primary battery was produced in the same manner as Comparative Example 1 except that the thickness of the positive electrode was set to 1.3 mm by adjusting the thickness of the positive electrode mixture sheet, and the PP nonwoven fabric with a thickness of 20 $\mu$m was changed to a PP nonwoven fabric with a thickness of 40 $\mu$m.

Table 1 shows the configurations of the positive electrode and the separator used in the cylindrical non-aqueous electrolyte primary batteries of Examples 1 to 3 and Comparative Examples 1 to 3.

[TABLE 1]

| | Thickness of positive electrode (mm) | Configuration of separator | |
|---|---|---|---|
| | | Separator 1 | Separator 2 |
| Example 1 | 1.6 | microporous PE film (thickness: 16 $\mu$m) | microporous PE film (thickness: 16 $\mu$m) |
| Example 2 | 1.6 | microporous PE film (thickness: 16 $\mu$m) | microporous PE film (thickness: 9 $\mu$m) |
| Example 3 | 1.6 | microporous PE film (thickness: 16 $\mu$m) | microporous PE film (thickness: 16 $\mu$m) |
| Comparative Example 1 | 1.6 | microporous PE film (thickness: 16 $\mu$m) | PP nonwoven fabric (thickness: 20 $\mu$m) |
| Comparative Example 2 | 1.6 | microporous PP film (thickness: 25 $\mu$m) | - |
| Comparative Example 3 | 1.3 | microporous PE film (thickness: 16 $\mu$m) | PP nonwoven fabric (thickness: 40 $\mu$m) |

First, the strength of each of the separators used in the cylindrical non-aqueous electrolyte primary batteries of Examples 1 to 2 and Comparative Examples 1 to 2 was measured by the following test using a device shown in FIG. 4.

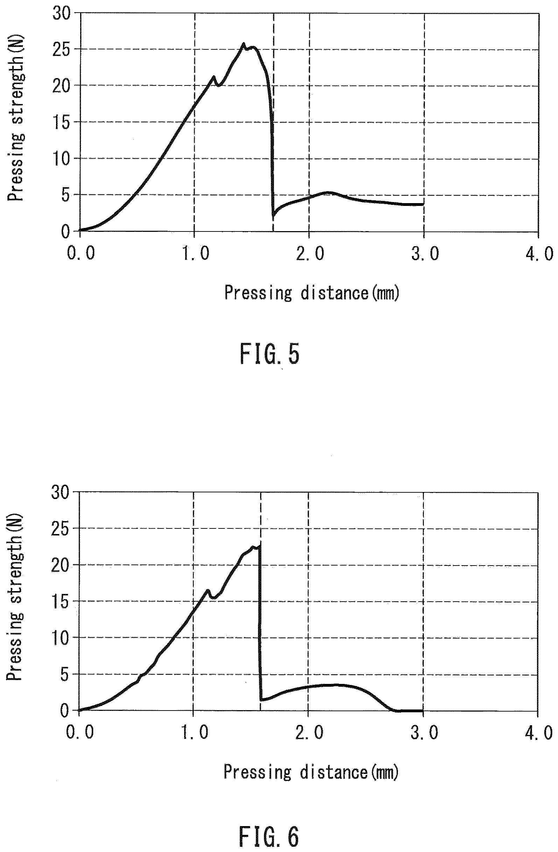

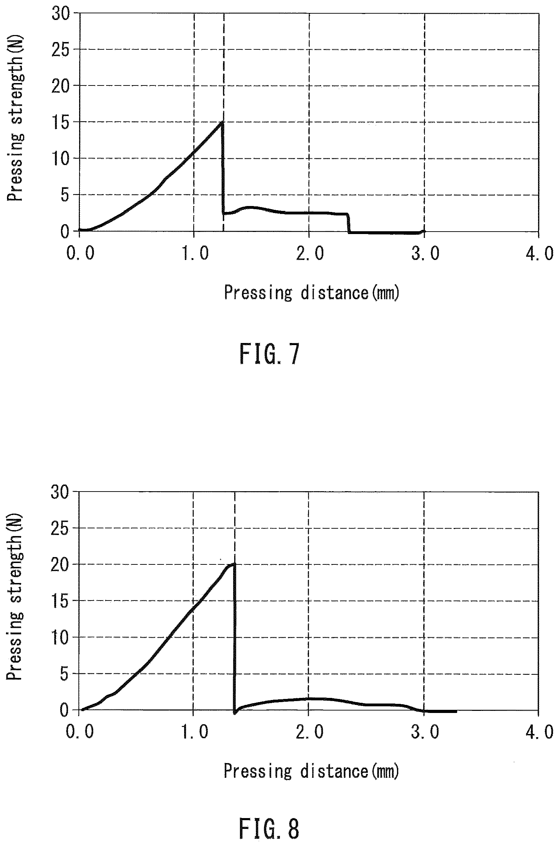

A separator 6 was cut to 30 mm × 30 mm, and both ends of the separator 6 were fixed by a holder 20. Using a pressure jig 21 with a tip shape as shown in FIG. 4, the center of the separator 6 was pressed down vertically at a rate of 5 mm/sec. The load (N) applied to the jig 21 and the moving distance of the jig 21 were measured as a pressing strength and a pressing distance, respectively. Thus, the strength of the separator 6 was evaluated. FIGS. 5 to 8 show changes in the pressing strength with respect to the pressing distance of the separators. FIG. 5 shows the results of the separator in Example 1, FIG. 6 shows the results of the separator in Example 2, FIG. 7 shows the results of the separator in Comparative Example 1, and FIG. 8 shows the results of the separator in Comparative Example 2.

As is evident from the comparison of FIGS. 5 and 6 with FIG. 7, in Examples 1 and 2, where the separator includes two microporous resin films with a thickness of 7 to 20 $\mu$m in layers, the maximum value of the pressing strength can be made larger even if the thickness of the separator is reduced, and the pressing distance can be made longer until the pressing strength is sharply reduced (i.e., the separator is broken), as compared to Comparative Example 1, where the separator includes the microporous resin film and the nonwoven fabric with a thickness of 7 to 20 $\mu$m in layers. Thus, the batteries of Examples 1 and 2 can reduce the occurrence of the internal short circuit due to the breakage of the separator even if the pressing force increases with an increase in the thickness of the positive electrode.

As is evident from the comparison of FIG. 6 with FIG. 8, the use of the separator including two microporous resin films in layers can enhance the strength of the separator and reduce the occurrence of the internal short circuit, as compared to the separator including one microporous resin film having the same thickness.

Moreover, the use of the separator including the microporous resin films in layers can prevent a failure that would occur when the wound electrode body is inserted into the outer can, since the coefficient of friction between the opposing surfaces of the microporous resin films can be increased, as compared to the separator including the microporous resin film and the nonwoven fabric in layers.

Next, the following measurement of a discharge capacity and evaluation of pulse discharge characteristics were performed on the cylindrical non-aqueous electrolyte primary batteries of Examples 1 to 3 and Comparative Examples 1 to 3. Table 2 shows the results.

[Discharge capacity]

Each of the cylindrical non-aqueous electrolyte primary batteries was continuously discharged with a current value of 40 mA at 20°C and the discharge capacity was measured until the battery voltage reached 2.0 V The number of samples for each battery was 5, and the average of the samples was taken as the discharge capacity of each of the batteries of the Examples and Comparative Examples.

[Pulse discharge characteristics]

Each of the cylindrical non-aqueous electrolyte primary batteries (which were different from those used for the measurement of the discharge capacity) was subjected to pulse discharge with a current value of 500 mA at -20°C for 0.25 sec and the minimum voltage was measured.

[TABLE 2]

|  | Discharge capacity (mAh) | Pulse discharge characteristics (V) |
|---|---|---|
| Example 1 | 2920 | 2.890 |
| Example 2 | 2910 | 2.888 |
| Example 3 | 2880 | 2.531 |
| Comparative Example 1 | 2880 | 2.850 |
| Comparative Example 2 | 2770 | 2.832 |
| Comparative Example 3 | 2210 | 2.653 |

The cylindrical non-aqueous electrolyte primary batteries of Examples 1 to 3 can prevent a failure that would occur during assembly even if the thickness of the positive electrode is increased. Thus, the batteries of Examples 1 to 3 can have a higher capacity than the battery of Comparative Example 3 which includes the positive electrode thinner than those of Examples 1 to 3.

On the other hand, the battery of Comparative Example 1, in which the separator includes the microporous resin film and the nonwoven fabric in layers, has a failure during assembly. Moreover, the battery of Comparative Example 2, in which the separator includes only one microporous resin film, is likely to cause a small short circuit, e.g., when the surface of the positive electrode is significantly uneven, since the strength of the separator is lower than that of the separators of the batteries of the Examples.

The impedance of each of the cylindrical non-aqueous electrolyte primary batteries of Examples 1 and 3 was measured at 1 kHz in an environment of 20°C. Then, the batteries were stored in an environment of 80°C with a relative humidity of 90% for 40 days. After the batteries were cooled, the impedance was measured again under the above conditions to determine the amount of increase in impedance before and after the storage. Table 3 shows the results.

[TABLE 3]

|  | Impedance of battery (mΩ) | | Increase in impedance (mΩ) |
|---|---|---|---|
|  | Before storage | After storage |  |
| Example 1 | 268 | 282 | 14 |
| Example 3 | 452 | 586 | 134 |

An increase in the impedance of the battery of Example 1, in which a lithium-aluminum alloy is formed on the surface of the negative electrode, is as small as 14 mΩ. On the other hand, an increase in the impedance of the battery of Example 3, in which a lithium-aluminum alloy is not formed on the surface of the negative electrode, is as large as 134 mΩ. The battery of Example 1 can prevent the deposition of manganese on the surface of the negative electrode due to the presence of the lithium-aluminum alloy on the surface of the negative electrode, and thus can reduce an increase in the internal resistance of the battery.

(Example 4)

A cylindrical non-aqueous electrolyte primary battery was produced in the same manner as Example 1 except that a non-aqueous solution was prepared by dissolving $LiCF_3SO_3$ at a concentration of 0.7 mol/L in a mixed solvent of ethylene carbonate, propylene carbonate, and dimethoxyethane (volume ratio of 1 : 1 : 3) and further adding $LiB(C_2O_4)_2$ to the solution at a ratio of 0.5% by mass, and this non-aqueous solution was used as an electrolyte solution.

(Example 5)

A cylindrical non-aqueous electrolyte primary battery was produced in the same manner as Example 2 except that a non-aqueous solution was prepared by dissolving $LiCF_3SO_3$ at a concentration of 0.7 mol/L in a mixed solvent of ethylene carbonate, propylene carbonate, and dimethoxyethane (volume ratio of 1 : 1 : 3) and further adding $LiB(C_2O_4)_2$ to the solution at a ratio of 0.5% by mass, and this non-aqueous solution was used as an electrolyte solution.

(Example 6)

A cylindrical non-aqueous electrolyte primary battery was produced in the same manner as Example 1 except that a non-aqueous solution was prepared by dissolving $LiCF_3SO_3$ and $LiBF_4$ at concentrations of 0.7 mol/L and 0.08 mol/L, respectively, in a mixed solvent of ethylene carbonate, propylene carbonate, and dimethoxyethane (volume ratio of 1 : 1 : 3) and further adding $LiB(C_2O_4)_2$ to the solution at a ratio of 0.5% by mass, and this non-aqueous solution was used as an electrolyte solution.

(Example 7)

A cylindrical non-aqueous electrolyte primary battery was produced in the same manner as Example 4 except that aluminum foil was not provided on the lithium metal foil in the production of the sheet-type negative electrode so as not to form a lithium-aluminum alloy on the surface of the negative electrode.

Next, the measurement of a discharge capacity and the evaluation of pulse discharge characteristics were performed in the same manner as Examples 1 to 3 on the cylindrical non-aqueous electrolyte primary batteries of Examples 4 to 7. Table 4 shows the results along with the results in Comparative Examples 1 to 3, as described above.

[TABLE 4]

|  | Discharge capacity (mAh) | Pulse discharge characteristics (V) |
|---|---|---|
| Example 4 | 2920 | 2.888 |
| Example 5 | 2910 | 2.885 |
| Example 6 | 2930 | 2.891 |
| Example 7 | 2880 | 2.526 |
| Comparative Example 1 | 2880 | 2.850 |
| Comparative Example 2 | 2770 | 2.832 |
| Comparative Example 3 | 2210 | 2.653 |

Like Examples 1 to 3, the cylindrical non-aqueous electrolyte primary batteries of Examples 4 to 7 can prevent a failure that would occur during assembly even if the thickness of the positive electrode is increased. Thus, the batteries of Examples 4 to 7 can have a higher capacity than the battery of Comparative Example 3 which includes the positive electrode thinner than those of Examples 4 to 7.

The impedance of each of the cylindrical non-aqueous electrolyte primary batteries of Examples 4, 6, and 7 was measured at 1 kHz in an environment of 20°C. Then, the batteries were stored in an environment of 80°C with a relative humidity of 90% for 40 days. After the batteries were cooled, the impedance was measured again under the above conditions to determine the amount of increase in impedance before and after the storage. Table 5 shows the results along with the results in Examples 1 and 3, as described above.

[TABLE 5]

| | Impedance of battery (mΩ) | | Increase in impedance (mΩ) |
|---|---|---|---|
| | Before storage | After storage | |
| Example 4 | 265 | 270 | 5 |
| Example 6 | 263 | 266 | 3 |
| Example 7 | 450 | 488 | 38 |
| Example 1 | 268 | 282 | 14 |
| Example 3 | 452 | 586 | 134 |

An increase in the impedance of the batteries of Examples 4 and 6, in which the non-aqueous electrolyte solution contains $LiCF_3SO_3$ (lithium salt A) and $LiB(C_2O_4)_2$, is smaller than that of the battery of Example 1, in which the non-aqueous electrolyte solution does not contain $LiB(C_2O_4)_2$. The batteries of Examples 4 and 6 can effectively reduce the reaction between the non-aqueous electrolyte solution and the negative electrode, and thus can further improve the long-term reliability.

The batteries of Examples 4 and 6, in which a lithium-aluminum alloy is formed on the surface of the negative electrode, can more effectively prevent the deposition of manganese on the negative electrode. Therefore, an increase in the impedance of the batteries of Examples 4 and 6 can be significantly reduced, as compared to the battery of Example 7, in which a lithium-aluminum alloy is not formed on the surface of the negative electrode. In particular, an increase in the impedance of the battery of Example 6, in which the electrolyte solution contains both $LiB(C_2O_4)_2$ and $LiBF_4$ (lithium salt B), can be further reduced, so that the long-term reliability of the battery can be greatly improved.

Comparing Example 7 and Example 3, in each of which a lithium-aluminum alloy is not formed on the surface of the negative electrode, indicates that an increase in the impedance of the battery of Example 7, in which the non-aqueous electrolyte solution contains $LiCF_3SO_3$ (lithium salt A) and $LiB(C_2O_4)_2$, is smaller than that of the battery of Example 3, in which the non-aqueous electrolyte solution does not contain $LiB(C_2O_4)_2$. The battery of Example 7 can effectively reduce the reaction between the non-aqueous electrolyte solution and the negative electrode, and thus can improve the long-term reliability.

(Example 8)

[Production of positive electrode]

A positive electrode mixture sheet with a thickness of 0.79 mm and a density of 2.87 g/cm$^3$ was produced in the same manner as Example 1 except that 1 part by mass of Ketjenblack "EC300J" (trade name) and 1 part by mass of acetylene black were used as the conductive assistant in the preparation of the positive electrode mixture.

The positive electrode mixture sheet thus obtained was cut into an inner positive electrode mixture sheet with a width of 42.5 mm and a length of 64 mm and an outer positive electrode mixture sheet with a width of 42.5 mm and a length of 76 mm.

Further, a sheet-type positive electrode with a thickness of 1.6 mm and a width of 42.5 mm was obtained in the same manner as Example 1 except that expanded metal of stainless steel (SUS316) with a width of 39 mm and a length of 60 mm was used as the positive electrode current collector.

[Production of negative electrode]

Lithium metal foil with a width of a width of 42 mm, a length of 165 mm, and a thickness of 0.27 mm was placed on copper foil (negative electrode current collector) with a width of 43 mm, a length of 170 mm, and a thickness of 15 μm. Further, aluminum foil with a width of 32 mm, a length of 165 mm, and a thickness of 6 μm was placed on the lithium metal foil. These components were arranged with their edges in the width direction aligned with each other, which were to be located on the lower side of the battery when the wound electrode group was inserted into the outer can. Thus, a sheet-type negative electrode was obtained. A negative electrode lead of nickel with a width of 3 mm, a length of 25 mm, and a thickness of 0.1 mm was crimped onto the lithium metal foil. In the sheet-type negative electrode, a lithium-aluminum alloy was formed on the surface of the negative electrode after assembly of the battery.

[Production of wound electrode body]

A wound electrode body was produced in the same manner as Example 1 except that two microporous PE films, each of which had a width of 49 mm, a length of 180 mm, and a thickness of 16 $\mu$m (porosity: 46%, air permeability: 200 sec/100 mL, piercing strength: 380 g), were aligned and stacked on top of each other without being bonded together and used as a separator.

[Assembly of battery]

A cylindrical non-aqueous electrolyte primary battery with an outer diameter of 17.0 mm and a total height of 50 mm was produced in the same manner as Example 1 by using the wound electrode body and injecting 4.1 mL of the electrolyte solution.
The battery of Example 8 was continuously discharged with a current value of 40 mA at 20°C until the battery voltage reached 2.0 V Consequently, the battery of Example 8 was able to have a discharge capacity of 3230 mAh. Like Example 1, Example 8 can also provide the battery with a high capacity.
The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes that come within the meaning and range of equivalency of the claims are intended to be embraced therein.

Description of Reference Numerals

| | |
|---|---|
| 1 | Cylindrical non-aqueous electrolyte primary battery |
| 2 | Outer can |
| 2a | Bottom |
| 3 | Wound electrode body |
| 4 | Positive electrode |
| 41, 42 | Positive electrode active material layer |
| 43 | Positive electrode current collector |
| 5 | Negative electrode |
| 51 | Negative electrode active material layer |
| 52 | Negative electrode current collector |
| 6 | Separator |
| 61, 62 | Microporous resin film |
| 7 | Cover plate |
| 8 | Insulation packing |
| 9 | Terminal body |
| 10 | Insulation plate |
| 11 | Base |
| 12 | Side wall |
| 13 | Gas outlet |
| 14 | Insulation plate |
| 20 | Holder |
| 21 | Pressure jig |

**Claims**

1.  A cylindrical non-aqueous electrolyte primary battery comprising:

    an electrode body in which a positive electrode having a positive electrode active material layer and a negative electrode having a negative electrode active material layer are spirally wound with a separator interposed therebetween; and
    a non-aqueous electrolyte solution,
    wherein a thickness of the positive electrode is 1.4 mm or more,
    at least two microporous resin films, each of which is an independent film and has a thickness of 7 to 20 $\mu$m,

are used as the separator and disposed between the positive electrode active material layer and the negative electrode active material layer, and
the at least two microporous resin films are not bonded together, but stacked on top of each other.

2. The cylindrical non-aqueous electrolyte primary battery according to claim 1, wherein the non-aqueous electrolyte solution contains at least one lithium salt A selected from the group consisting of $LiClO_4$, $LiCF_3SO_3$, $LiC_2F_5SO_3$, $LiN(FSO_2)_2$, and $LiN(CF_3SO_2)_2$ and further contains $LiB(C_2O_4)_2$.

3. The cylindrical non-aqueous electrolyte primary battery according to claim 2, wherein a content of $LiB(C_2O_4)_2$ in the non-aqueous electrolyte solution is 0.1 to 5% by mass.

4. The cylindrical non-aqueous electrolyte primary battery according to claim 2 or 3, wherein the non-aqueous electrolyte solution contains at least one lithium salt B selected from the group consisting of $LiPF_6$, $LiBF_4$, $LiAsF_6$, and $LiSbF_6$.

5. The cylindrical non-aqueous electrolyte primary battery according to any one of claims 1 to 4, wherein the negative electrode active material layer is a lithium sheet on which a lithium-aluminum alloy is formed.

6. The cylindrical non-aqueous electrolyte primary battery according to any one of claims 1 to 5, wherein the thickness of the positive electrode is 2 mm or less.

7. The cylindrical non-aqueous electrolyte primary battery according to any one of claims 1 to 6, wherein a porosity of each of the microporous resin films is 35 to 55%.

8. The cylindrical non-aqueous electrolyte primary battery according to any one of claims 1 to 7, wherein a total thickness of the microporous resin films is 20 to 40 $\mu$m.

FIG. 1

FIG. 2

FIG. 3

FIG. 4

FIG. 5

FIG. 6

FIG. 7

FIG. 8

## INTERNATIONAL SEARCH REPORT

| | International application No. |
|---|---|
| | PCT/JP2019/035368 |

### A. CLASSIFICATION OF SUBJECT MATTER
Int.Cl. H01M6/16(2006.01)i, H01M2/16(2006.01)i, H01M4/06(2006.01)i

According to International Patent Classification (IPC) or to both national classification and IPC

### B. FIELDS SEARCHED
Minimum documentation searched (classification system followed by classification symbols)
Int.Cl. H01M6/16, H01M2/16, H01M4/06

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2016/195062 A1 (HITACHI MAXELL LTD.) 08 December 2016, claim 1, paragraphs [0026], [0034]–[0038], [0042], [0050]–[0055] & US 2017/0358791 A1, claim 1, paragraphs [0029], [0037]–[0041], [0045], [0053]–[0057] & EP 3236523 A1 & CN 107078312 A & JP 6178020 B2 | 1–8 |
| Y | JP 2014-056843 A (HITACHI MAXELL LTD.) 27 March 2014, paragraphs [0067], [0070], [0071], [0099], [0100], [0114], examples 15–21 & US 2010/0221965 A1, paragraphs [0070], [0073], [0074], [0102], [0103], [0116], examples 15–21 & US 2015/0236318 A1 & WO 2009/096451 A1 & KR 10-2010-0040955 A & CN 101796669 A | 1–8 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.10.2019 | 21.10.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/035368

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2008/114727 A1 (HITACHI MAXELL LTD.) 25 September 2008, claim 6, paragraphs [0098], [0099], [0119], [0124], [0128], example 7 & US 2010/0015530 A1, claim 6, paragraphs [0116], [0117], [0137], [0142], [0146], example 7 & KR 10-1281568 B1 & KR 10-2009-0102874 A & CN 101611506 A & CN 103258979 A | 1-8 |
| A | JP 2012-138225 A (HITACHI MAXELL ENERGY LTD.) 19 July 2012, entire text (Family: none) | 1-8 |
| A | WO 2015/046126 A1 (HITACHI MAXELL LTD.) 02 April 2015, entire text (Family: none) | 1-8 |
| A | JP 2006-261093 A (MAXELL HOKURIKU SEIKI KK) 28 September 2006, entire text (Family: none) | 1-8 |
| P, A | JP 2018-170276 A (MAXELL HOLDINGS LTD.) 01 November 2018, entire text (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004335380 A
- JP 2013069466 A
- JP 2012138225 A

- JP 6178020 B
- JP 2018170276 A